Europäisches Patentamt

European Patent Office

Office européen des brevets

(11) Veröffentlichungsnummer: **0 468 269 A1**

# (12) EUROPÄISCHE PATENTANMELDUNG

(21) Anmeldenummer: **91111379.3**

(51) Int. Cl.⁵: **B22F 9/08**

(22) Anmeldetag: **09.07.91**

(30) Priorität: **21.07.90 DE 4023277**

(43) Veröffentlichungstag der Anmeldung:
**29.01.92 Patentblatt 92/05**

(84) Benannte Vertragsstaaten:
**AT BE CH DE ES FR GB IT LI LU NL SE**

(71) Anmelder: **MESSER GRIESHEIM GMBH**
**Hanauer Landstrasse 330**
**W-6000 Frankfurt/Main 1(DE)**

(72) Erfinder: **Gross, Gerhard, Dr.**

**Bengdbruchstrasse 34**
**W-4156 Willich 4(DE)**
Erfinder: **Leinberger, Klaus**
**Ackerstrasse 34**
**W-4156 Willich(DE)**
Erfinder: **Vetter, Johannes, Dr.**
**Steinstrasse 14**
**W-4156 Willich 2(DE)**
Erfinder: **Bergmann, Hans Wilhelm, Prof. Dr.**
**Irisstrasse 9**
**W-8501 Echental Brand(DE)**

(54) **Verfahren und Vorrichtung zur Herstellung von Pulvern.**

(57) Die Erfindung besteht darin, daß bei einem Verfahren und einer Vorrichtung zur Herstellung von Pulvern aus geschmolzenen Stoffen durch Zerstäuben der Schmelze zu Partikeln mittels strömender Medien und gleichzeitiger Abkühlung der Partikel oder Abkühlung während ihrer Fallbewegung, mit einer Schmelzvorrichtung (10), mit einer Zestäubungsvorrichtung (11) sowie mit einem der Zerstäubungsvorrichtung zugeordneten, an die Schmelzvorrichtung angesetzten Verdüsungsturm (12), wobei tiefsiedendes verflüssigtes Gas über die Zerstäubungsvorrichtung unter Druck auf den in den Verdüsungsturm eintretenden Schmalzenstrahl (15) gespritzt wird, das tiefsiedende verflüssigte Gas direkt einem Druckspeicher entnommen und vorzugsweise unter Zwischenschaltung eines Unterkühlers der Zerstäubungsvorrichtung zugeführt wird.

Dadurch können teuere und aufwendige Hochdruckkolbenpumpen entfallen.

Die vorliegende Erfindung betrifft ein Verfahren zur Herstellung von Pulvern aus geschmolzenen Stoffen durch Zerstäuben der Schmelze zu Partikeln mittels strömender Medien und gleichzeitiger Abkühlung der Partikel, oder Abkühlung während ihrer Fallbewegung, mit einer Schmelzvorrichtung, mit einer Zerstäubungsvorrichtung sowie mit einem der Zerstäubungsvorrichtung zugeordneten, an die Schmelzvorrichtung angesetzten Verdüsungsturm, wobei tiefsiedendes verflüssigtes Gas über die Zerstäubungsvorrichtung unter Druck auf den in den Verdüsungsturm eintretenden Schmelzenstrahl gespritzt wird.

Mit diesem Oberbegriff wird auf einen Stand der Technik bezug genommen, wie er beispielsweise aus der DE-OS 37 30 147 und DE-OS 37 32 365 bekannt geworden ist. Bei den bekannten Verfahren erfolgt das Verdüsen der Schmelze unter hohem Druck (einige 100 bar). Diese hohen Drücke können nur erreicht werden, wenn eine teuere Hochdruckkolbenpumpe das flüssige Gas verdichtet.

Aufgabe der vorliegenden Erfindung ist es, ein einfaches Verfahren und eine einfache Vorrichtung zur Herstellung von Pulvern zur Verfügung zu stellen, die insbesondere ohne aufwendige und teuere Pumpenaggregate auskommen.

Diese Aufgabe wird gemäß der Erfindung dadurch gelöst, daß das tiefsiedende verflüssigte Gas direkt einem Druckspeicher entnommen und vorzugsweise unter Zwischenschaltung eines Unterkühlers der Zerstäubungsvorrichtung zugeführt wird. Bei einer bevorzugten Variante wird dabei das Gas direkt einem vakuumisolierten Hochdrucktank, der vorzugsweise einen Druckzusatzverdampfer aufweist, entnommen.

Der Aufbau dieser Speicherbehälter sowie die dazugehörige Ausrüstung sind allgemein bekannt und beispielsweise in den Firmendruckschriften, Sachnummer 08 12 036 und 08 12 037 der Anmelderin näher beschrieben.

Zu der genannten Ausstattung zählen auch sogenannte Druckzusatzverdampfer, die sicherstellen sollen, daß bei der Entnahme von verflüssigtem Gas das im Behälter frei gewordene Volumen (= entnommene Flüssigvolumen) durch Druckgas ersetzt wird, wodurch der Entnahmedruck konstant gehalten wird. Dabei wird, wie allgemein bekannt (s. a. u. a. Druckschriften), dem Speicherbehälter verflüssigtes Gas entnommen, in einem Druckzusatzverdampfer in Gas umgewandelt und das Gas dem Speicherbehälter oberhalb des Flüssigspiegels zugeführt. Die Druckzusatzverdampfer können anbei durch Dampf, Elektrizität oder warmes Wasser beheizt werden.

Mit solchen Tankanlagen können z. Z. Drücke bis ca. 100 bar problemlos erreicht werden. Über eine isolierte Rohrleitung wird das flüssige Gas einem z. B. mit flüssigem Stickstoff betriebenen Unterkühler zugeführt, wo es bis kurz über Gleichgewichtstemperatur bei 1 bar abgekühlt wird. Durch eine weitere kurze isolierte Druckleitung erreicht das unterkühlte flüssige Gas das Düsensystem, welches zusätzlich mit einer Wärmedämmschicht versehen sein kann. Weiterhin besteht die Möglichkeit, das Düsensystem Vakuum zu isolieren oder mit flüssigem Stickstoff zu kühlen.

Bei einer anderen ebenfalls günstigen Variante wird das Gas einem Niederdruckkältetank (bis ca. 20 bar), an den ausgangsseitig eine kostengünstige Pumpe z. B. Kreiselpumpe (bis ca.100 bar), angeschlossen ist, entnommen.

Beide Varianten haben den Vorteil, daß keine teuere und aufwendige Hochdruck-Kolbenpumpe eingesetzt werden muß. Hinzu kommt, daß es nunmehr einfach möglich ist, bereits bestehende Anlagen zur Pulverherstellung, die mit gasförmigem Gas (Inertgasverdüsung) arbeiten, in einfachster Weise auf den Betrieb mit tiefsiedenden verflüssigten Gasen umzurüsten. Dabei ist dann nur die Gasversorgung zu ändern, während die übrigen Teile der Verdüsungsanlage beibehalten werden können.

Weitere vorteilhafte Verfahrensmerkmale sowie eine besonders günstige Vorrichtung zur Durchführung des Verfahrens sind in den Ansprüchen 2 bis 19 angegeben.

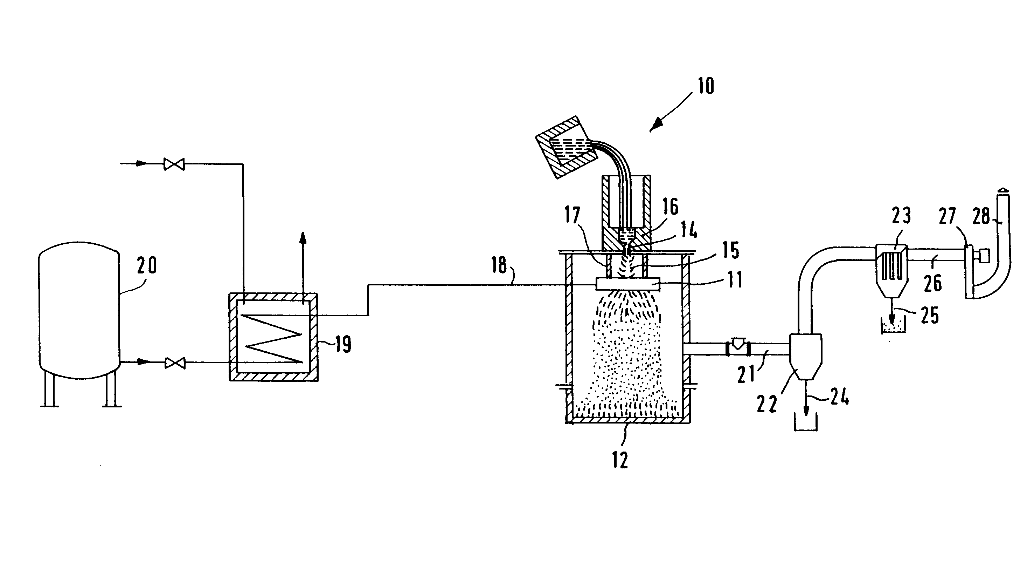

In der Zeichnung ist eine Schmelzvorrichtung mit 10, eine Zerstäubungsvorrichtung mit 11 sowie eine der Zerstäubungsvorrichtung 11 zugeordente und mit der Schmelzvorrichtung 10 verbundener Verdüsungsturm mit 12 gekennzeichnet.

In der Schmelzvorrichtung 10 wird auf ca. 900°C bis 1700°C erhitztes Metall durch einen Auslauf 14 auf einen Durchmesser von 1 bis 20 mm geformt und fällt als Metallstrahl 15 in den Verdüsungsturm 12. Das Metall wird dabei entweder in einem separaten Ofen geschmolzen und in den Tundish 16 abgegossen oder direkt in dem als Ofen ausgebildeten Tundish geschmolzen und erhitzt.

Ein Einfrieren des Metallstrahles 15 wird dadurch verhindert, daß die Fallstrecke der Schmelze zwischen Austritt und Gasauftreffpunkt durch eine wärmeisolierende Einhausung 17 oder einer elektrischen Beheizung umgeben ist. Dabei entsteht in der vorzugsweise zylindrischen Einhausung ein Unterdruck, der den Schmelzenstrahl nach Austritt aus der Düse zusätzlich beschleunigt.

Die Zerstäubungsvorrichtung 11 weist eine Ringspaltdüse oder mehrere konzentrisch angeordnete Einzeldüsen mit fest vorgegebenem Anstellwinkel auf.

Durch Verändern der Düsenparameter, wie Öffnungswinkel, Gasaustrittsquerschnitt und Düsendurchmesser als auch des Druckbereiches und des Verhältnisses Gasmenge/Metallmenge kann sowohl die Kornform (rund bis spratzig) als auch die Korngrößenverteilung gezielt eingestellt werden.

Bei Verwendung einer Ringspaltdüse kann das flüssige Gas ohne oder mit Drall austreten, wodurch eine Verbesserung der Zerstäubung erreicht wird. Durch eine geeignete, z. B. aus der deutschen Patentanmeldung P 40 086 518 bekannten, Konstruktion kann der Ringspalt eingestellt werden. Die Strömungsgeschwindigkeit der Flüssigkeit bleibt dabei nahezu unabhängig vom Druck, da sie durch einen Federring kontrolliert wird. Dies ermöglicht ein Verdüsen unter konstanten Bedingungen auch bei Druckschwankungen im flüssigen Gas.

Die Zerstäubungseinrichtung 11 ist über die isolierte Rohrleitung 18 unter Zwischenschaltung von einem mit flüssigem Stickstoff betriebenen Unterkühler 19, direkt mit einem Hochdruckkältetank 20 verbunden. Aus diesem wird das tiefsiedende verflüssigte Gas ohne Zwischenschaltung einer Hochdruckkolbenpumpe direkt der Zerstäubungseinrichtung zugeführt und flüssiger Stickstoff oder flüssiges Argon bzw. Helium mit einem Druck von 1 - 100, vorzugsweise 1 - 50 bar gegen den Metallstrahl 15 gespritzt.

Dabei wird der beim Auftreffen des tiefsiedenden verflüssigten Gases auf die nach unten fließende Schmelze auftretende Leidenfrost'sche Effekt dadurch vermieden, daß die Relativgeschwindigkeit zwischen Gas und Schmelze mindestens 40 m/s beträgt.

An den Verdüsungsturm 12 ist über eine Leitung 21 ein Zyklon 22 und ein Filter 23 angeschlossen.

Dem Zyklon 22 und dem Filter 23 wird über Leitungen 24 bzw. 25 das Metallpulver entnommen.

Der Ausgang 26 des Filters 23 steht unter Zwischenschaltung eines Sauggebläses 27 mit einem Abluftkamin 28 in Verbindung.

Versuche mit PbSn-Legierungen und CuPb-Legierungen ergaben, je nach Einstellwerten, rundes bis spratziges Pulver mit einem $d_{50}$ von ca. 100 bis 120 $\mu$m. Im Gegensatz zur Inertgasverdüsung wird bei diesem Verfahren auch die Latentwärme des flüssigen Gases genutzt.

**Patentansprüche**

1. Verfahren zur Herstellung von Pulvern aus geschmolzenen Stoffen durch Zerstäuben der Schmelze zu Partikeln mittels strömender Medien und gleichzeitige Abkühlung der Partikel oder Abkühlung der Partikel während ihrer Fallbewegung, mit einer Schmelzvorrichtung, mit einer Zerstäubungsvorrichtung sowie mit einem der Zerstäubungsvorrichtung zugeordneten, an die Schmelzvorrichtung angesetzten Verdüsungsturm, wobei tiefsiedendes verflüssigtes Gas über die Zerstäubungsvorrichtung unter Druck auf den in den Verdüsungsturm eintretenden Schmelzenstrahl gespritzt wird, dadurch gekennzeichnet, daß das tiefsiedende verflüssigte Gas direkt einem Druckspeicher (20) entnommen und vorzugsweise unter Zwischenschaltung eines Unterkühlers (19) der Zerstäubungsvorrichtung (11) zugeführt wird.

2. Verfahren nach Anspruch 1, dadurch gekennzeichnet, daß der Druckspeicher (20) als Hochdruckkältetank vorzugsweise mit einem Druckzusatzverdampfer ausgebildet ist.

3. Verfahren nach Anspruch 1, dadurch gekennzeichnet, daß der Druckspeicher (20) als Niederdruckkältetank mit ausgangsseitig angeschlossener, preiswerten Pumpe, z. B. Kreiselpumpe, ausgebildet ist.

4. Verfahren nach einem der Ansprüche 1 bis 3, dadurch gekennzeichnet, daß zur Vermeidung des Leidenfrost'schen Effektes beim Auftreten des flüssigen Gasstrahles auf die nach unten fließende Schmelze eine Relativgeschwindigkeit beider Medien zueinander von mindestens 40 m/s eingestellt wird.

5. Verfahren nach einem der Ansprüche 1 bis 4, dadurch gekennzeichnet, daß das tiefsiedende verflüssigte Gas mit einem Druck zwischen 1 und 100 vorzugsweise 1 bis 50 bar durch eine Düse auf den Schmelzenstrahl gespritzt wird.

6. Verfahren nach einem der Ansprüche 1 bis 5, dadurch gekennzeichnet, daß flüssiger Stickstoff, flüssiges Argon oder flüssiges Helium verwendet wird.

7. Verfahren nach einem der Ansprüche 1 bis 6, dadurch gekennzeichnet, daß das tiefsiedende verflüssigte Gas aus einem vakuumisolierten Druckspeicher entnommen wird und über eine vakuumisolierte oder gleichwertig isolierte Rohrleitung ohne Verwendung einer Hochdruckpumpe der Düse oder Zerstäubungsvorrichtung zugeführt wird.

8. Verfahren nach einem der Ansprüche 1 bis 7, dadurch gekennzeichnet, daß vor der Düse ein mit flüssigem Stickstoff betriebender Unterkühler in die isolierte Druckleitung eingebaut ist, der das zur Verdüsung verwendete flüssige Gas auf einen reproduzierbaren Temperaturwert nahe der Gleichgewichtstemperatur bei Umgebungsdruck oder dem fest-flüssig-Gleichgewicht bei Verdüsungsdruck abkühlt.

9. Verfahren nach einem der Ansprüche 1 bis 8,
   dadurch gekennzeichnet,
   daß die Düse mit flüssigem Stickstoff gekühlt wird.

10. Verfahren nach einem der Ansprüche 1 bis 9,
    dadurch gekennzeichnet,
    daß die Düse vakuumisoliert ist.

11. Verfahren nach einem der Ansprüche 1 bis 9,
    dadurch gekennzeichnet,
    daß die Düse mit Schaumstoff oder Mineralfasern isoliert ist.

12. Verfahren nach einem der Ansprüche 1 bis 11,
    dadurch gekennzeichnet,
    daß der vorzugsweise einstellbare Winkel zwischen Schmelzenstrahl und auftreffenden Gasstrahl zwischen 30° und 90° liegt.

13. Verfahren nach einem der Ansprüche 1 bis 12,
    dadurch gekennzeichnet,
    daß das Verhältnis Masse flüssiges Gas zu Masse der Schmelze 3:1 bis. 12:1 beträgt.

14. Vorrichtung zur Durchführung des Verfahrens nach einem der Ansprüche 1 bis 13,
    gekennzeichnet durch
    eine Schmelzvorrichtung (10), eine Zerstäubungsvorrichtung (11), einem der Zerstäubungsvorrichtung (11) zugeordneten, mit der Schmelzvorrichtung (10) verbundenen Verdüsungsturm (12) und einem gegebenenfalls unter Zwischenschaltung eines Unterkühlers (19) an die Zerstäubungsvorrichtung (11) angeschlossenen Druckspeicher (20) für das tiefsiedende verflüssigte Gas.

15. Vorrichtung nach Anspruch 14,
    dadurch gekennzeichnet,
    daß die Zerstäubungsvorrichtung (11) ein oder mehrere auf den aus der Schmelzvorrichtung (10) ausfließenden Metallstrahl (15) gerichtete Düse aufweist, die an den Druckspeicher (20) angeschlossen sind.

16. Vorrichtung nach Anspruch 15,
    dadurch gekennzeichnet,
    daß die Düse als Ringspaltdüse ausgebildet ist.

17. Vorrichtung nach einem der Ansrpüche 14 bis 16,
    dadurch gekennzeichnet,
    daß die Fallstrecke der Schmelze zwischen Schmelzvorrichtung (10) und Zerstäubungsvorrichtung (11) von einer wärmeisolierenden Einhausung (17) oder einer elektrischen Beheizung umgeben ist.

18. Vorrichtung nach einem der Ansprüche 14 bis 17,
    dadurch gekennzeichnet,
    daß an den Verdüsungsturm (12) über eine Leitung (21) ein Zyklon (22) und ein Filter (23) angeschlossen sind.

19. Vorrichtung nach Anspruch 18,
    dadurch gekennzeichnet,
    daß der Filterausgang (26) unter Zwischenschaltung eines Sauggebläses (27) mit einem Abluftkamin (28) in Verbindung steht.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 12, no. 67 (M-673)2. März 1988 & JP-A-62 214 104 ( NIPPON KOKAN KK ) 19. September 1987 | 1-2 | B 22 F 9/08 |
| Y | – – – | 3-19 | |
| Y | FR-A-2 595 595   (ACIERIES AUBERT ET DUVAL ET AL) * Seite 5, Zeile 8 - Seite 8, Zeile 31 * * – – – | 3-19 | |
| Y | US-A-4 021 167   (I.NIIMI ET AL) * Spalte 2, Zeile 39 - Zeile 60; Beispiel 4 * * – – – – – | 12,16 | |
| | | | **RECHERCHIERTE SACHGEBIETE (Int. Cl.5)** |
| | | | B 22 F F 25 C |

Der vorliegende Recherchenbericht wurde für alle Patentansprüche erstellt

| Recherchenort | Abschlußdatum der Recherche | Prüfer |
|---|---|---|
| Den Haag | 24 Oktober 91 | SCHRUERS H.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

--------------------------------------------------

& : Mitglied der gleichen Patentfamilie, übereinstimmendes Dokument